# EUROPEAN PATENT APPLICATION

(11) **EP 4 697 113 A1**
(43) Date of publication of application: **18.02.2026**
(21) Application number: 24788835.7
(22) Date of filing: 12.04.2024
(51) Int. Cl.: G05B 23/02

(54) **ABNORMALITY DETECTING METHOD, ABNORMALITY DETECTING SYSTEM, AND ABNORMALITY DETECTING PROGRAM**

(30) Priority: 14.04.2023 JP 2023066512
(71) Applicant: Daicel Corporation, Osaka-shi, Osaka 530-0011 (JP)
(72) Inventor: MURAKAMI, Yusaku, Tokyo 108-8230 (JP); YAMANO, Koichi, Tokyo 108-8230 (JP); OKA, Hiroki, Tokyo 108-8230 (JP); TAKEMURA, Kazutoshi, Tokyo 108-8230 (JP); ARAKI, Masanobu, Tokyo 108-8230 (JP)
(74) Representative: Grünecker Patent- und Rechtsanwälte PartG mbB
(86) International application number: PCT/JP2024/014825
(87) International publication number: WO 2024/214813

(57) **Abstract**

To provide a technique for performing abnormality detection in a process in which a preferred operation state changes. An abnormality detecting method is executed by one or more computers. The method includes reading a plurality of types of process data output from a plant, calculating a rate of change for each of the plurality of types of process data, and determining that an abnormality or a sign of the abnormality is detected when a combination of degrees of the rates of change related to the plurality of types of process data matches a predetermined pattern.

## Description

### Technical Field

The present disclosure relates to an abnormality detecting method, an abnormality detecting system, and an abnormality detecting program.

### Background Art

In the related art, there has been proposed an abnormal irregularity cause identifying device, which includes a process data acquisition unit that reads process data from a storage device that stores the process data successively output by a plurality of sensors provided in a production facility, an abnormality determination unit that calculates an abnormality degree representing an extent of an irregularity in the process data read by the process data acquisition unit, and a cause diagnosis unit that determines whether the abnormality degree calculated by the abnormality determination unit satisfies a predetermined criterion, with respect to the process data output by the plurality of sensors, using causal relation information that defines, in a hierarchical manner along a time series, combinations of causal relations between causes and irregularities of the process data output by the plurality of sensors, which appear as influences resulting from the causes (Patent Document 1).

### Citation List

### Patent Document

Patent Document 1: WO 2021/241576

### Summary of Invention

### Technical Problem

For example, in a process in which a preferable operation state relatively greatly varies due to the influence of preceding processes, for example, in a recovery process of a certain target substance in a plant, it is difficult to generically define whether an operation state is normal or abnormal. An object of the present disclosure is to provide a technique for performing abnormality detection in a process in which a preferable operation state changes.

### Solution to Problem

An abnormality detecting method according to the present disclosure may be implemented by the following aspects.

### Aspect 1

An abnormality detecting method is performed by one or more computers. The method includes reading a plurality of types of process data output from a plant, calculating a rate of change for each of the plurality of types of process data, and determining that an abnormality or a sign thereof is detected when a combination of degrees of the rates of change related to the plurality of types of process data matches a predetermined pattern.

### Aspect 2

In Aspect 1, the pattern may be defined for each assumed cause of the abnormality or the sign of the abnormality.

### Aspect 3

In Aspect 1 or 2, the pattern may be defined by a combination of pieces of information, respectively associated with the plurality of types of process data, the pieces of information each indicating an increase relative to a criterion, a decrease relative to the criterion, or a change within the criterion.

### Aspect 4

In any one of Aspects 1 to 3, the plant may operate in a continuous mode in which a target to be processed is continuously processed while being transferred at a predetermined speed.

### Aspect 5

In any one of Aspects 1 to 4, the target to be processed may be a discharged substance discharged in an upstream process performed in the plant.

### Aspect 6

In Aspect 4 or 5, the plant may perform detection of the abnormality or the sign of the abnormality during performance of a purification process for purifying the target substance from a target to be processed, a recovery process for recovering the target substance from the target to be processed, a cleaning process for cleaning the target to be processed, or a drying process for drying the target to be processed.

Note that the contents of "Solution to Problem" may be provided as a system including a device such as a computer or a plurality of devices, a method executed by one or more computers, or a program to be executed by one or more computers. Note that a recording medium that stores the program may be provided.

### Advantageous Effects of Invention

According to the disclosed technique, it is possible to provide a technique for performing abnormality detection in a process in which a preferable operation state changes.

### Brief Description of Drawings

FIG. 1 is a diagram illustrating an example of a system according to the present embodiment.
FIG. 2 is a diagram illustrating an example of a configuration of a plant.
FIG. 3 is a process flow chart illustrating an example of abnormality detection processing.
FIG. 4 is a diagram for explaining process data and the like.
FIG. 5 is a diagram for explaining a determination logic.

### Description of Embodiments

Hereinafter, an embodiment of an abnormality detection device will be described with reference to the accompanying drawings.

### Embodiment

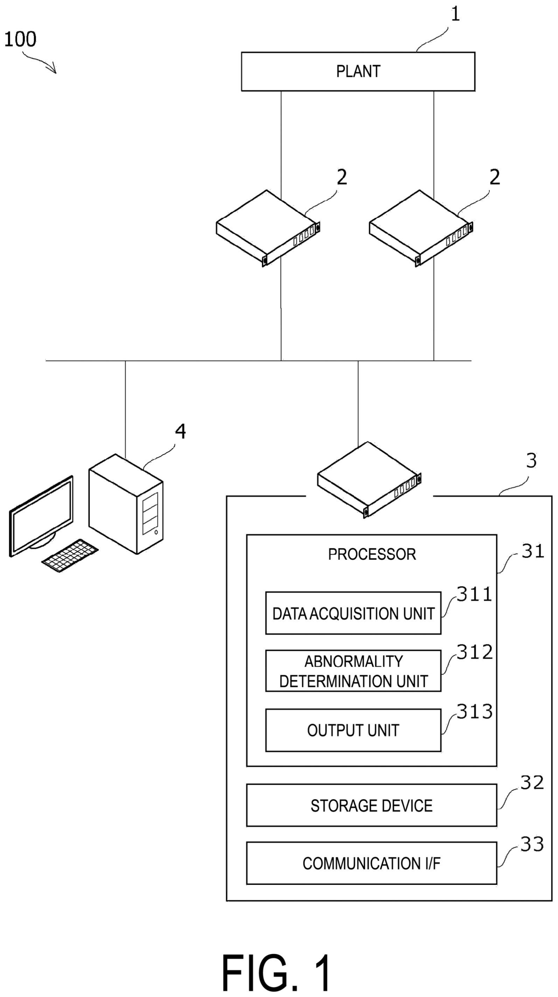

FIG. 1 is diagram illustrating an example of a system according to the present embodiment. A system 100 includes a plant 1, a control station 2, an abnormality detection device 3, and a user terminal 4. The system 100 is, for example, a distributed control system (DCS) and includes a plurality of the control stations 2. That is, a control system of the plant 1 is divided into a plurality of sections, and distributed control is performed by the control stations 2 for the control sections.

The plant 1 is, for example, a chemical process plant, and is a production facility for achieving a certain purpose through a series of chemical processes. The plant 1 may be a facility in which a preferable operation state relatively greatly varies due to the influences of preceding processes, as in a recovery plant for recovering a predetermined compound such as a raw material from drainage, for example. A so-called continuous process can be cited as an example of a process that is relatively greatly affected by the upstream process. The continuous process is a process of continuously processing a target to be processed while transferring the target to be processed at a predetermined speed. The continuous process includes, in addition to a recovery process for recovering a target substance from a target to be processed, a purification process for performing distillation, crystallization, concentration, and the like on the target to be processed, a cleaning process for cleaning the target to be processed, a drying process for drying the target to be processed, and the like. The plant 1 includes a sensor that monitors operation states of respective devices and outputs state signals (that is, process data).

The control station 2 receives the process data from the plant 1 and outputs control signals to the plant 1. Then, actuators such as valves and other devices included in the plant 1 are controlled in response to the control signals. Further, the control station 2 functions as an annunciator that outputs information indicating an operation state of the plant 1 to the user terminal 4, and in a case in which an abnormality is detected, outputs an alarm or the like to the user terminal 4. At this time, information regarding an operation for resolving the abnormality or a sign thereof may be output to the user terminal 4 in accordance with the cause of the detected abnormality or the sign thereof.

The abnormality detection device 3 acquires the process data output from the plant 1 via the control station 2. The process data includes temperatures, pressures, flow rates, and the like of targets to be processed such as raw materials, intermediates, products, drainage, and waste water, and also includes setting values and the like for determining operation conditions of devices included in the plant 1. The abnormality detection device 3 detects an abnormality or a sign thereof in the plant 1, using the acquired process data. Note that, a change deviating from an expected operation state in the plant 1 and a change serving as a sign thereof (that is, an abnormality or a sign thereof) are also referred to as "irregularity".

FIG. 1 illustrates a block diagram illustrating an example of a configuration of the abnormality detection device 3. The abnormality detection device 3 is a computer and includes a processor 31, a storage device 32, and a communication interface (I/F) 33. The processor 31 is an arithmetic processing device such as a central processing unit (CPU) and performs each processing according to the present embodiment by executing a program. In an example in FIG. 1, functional blocks in the processor 31 are illustrated. That is, the processor 31 functions as a data acquisition unit 311, an abnormality determination unit 312, and an output unit 313 by executing a predetermined program.

The data acquisition unit 311 acquires the process data from the plant 1 via, for example, the communication I/F 33 and the control station 2, and causes the storage device 32 to store the process data. The abnormality determination unit 312 detects an abnormality or a sign thereof, using the process data. The abnormality determination unit 312 may identify a cause of an abnormality or a sign thereof in addition to detecting the abnormality or the sign thereof. The detection of the abnormality or the sign thereof is performed, for example, by monitoring whether the process data is increasing or decreasing and a magnitude of a rate of change thereof, and also by determining whether a pattern of changes in the pieces of process data respectively output from a plurality of sensors matches a predetermined pattern indicating the abnormality or the sign thereof. The output unit 313 outputs a warning to the user terminal 4 via, for example, the control station 2. The output unit 313 may further output, to the user terminal 4, information regarding an operation for resolving the abnormality or the sign thereof, in accordance with the cause of the detected abnormality or the sign thereof.

The user terminal 4 is a computer used by a user such as an operator who performs operation of the plant 1. Information for monitoring an operation state, which is transmitted from the control station 2, is displayed on the user terminal 4. In addition, in a case in which the abnormality detection device 3 detects an abnormality or a sign thereof, information to that effect is notified to the user terminal 4, and the user terminal 4 appropriately outputs a warning or the like. Further, the user can control the operation of the plant 1 via the control station 2 by operating the user terminal 4.

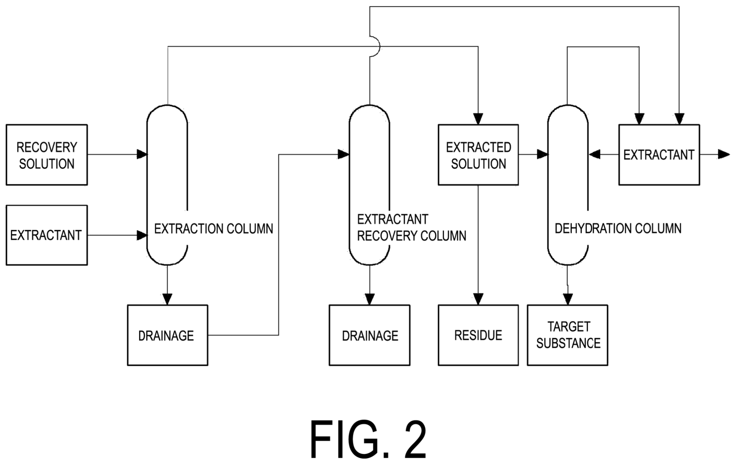

FIG. 2 is a diagram illustrating an example of a configuration of a plant. FIG. 2 schematically illustrates a recovery plant for recovering a target substance, which is a predetermined compound, from a recovery solution, for example. The recovery solution is, for example, a discharged substance (drainage) discharged in an upstream process and is a target to be processed in a recovery process. The target substance is, for example, an unreacted raw material, a solvent, a dissolving agent, or the like. Note that the devices constituting the plant 1 include at least some of, for example, a reactor, a distillation apparatus, a heat exchanger, a compressor, a pump, a tank, and the like, and these are connected via pipes. Furthermore, sensors, valves, and the like are provided at predetermined positions of the devices and the pipes. The sensor can include a thermometer, a flow meter, a pressure gauge, a level meter, a densitometer, or the like. Further, the sensor successively outputs the process data. Note that each sensor is associated with a "tag", which is identification information for identifying the sensor, and the process data includes, for example, the tag of the sensor and a measurement value of the sensor. That is, in the system 100, a type of process data can be identified based on the tag.

### Abnormality Detection Processing

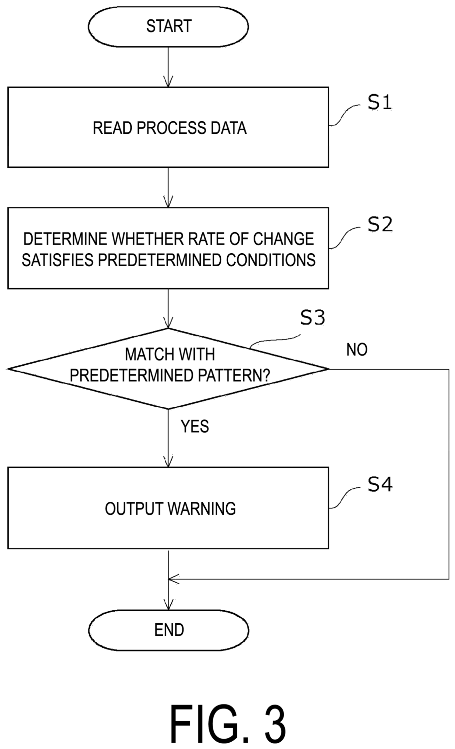

FIG. 3 is a process flow chart illustrating an example of abnormality detection processing. The abnormality detection device 3 is to repeatedly perform processing as illustrated in FIG. 3. Further, the process data transmitted from the control station 2 is to be sequentially stored in the storage device 32 of the abnormality detection device 3.

The data acquisition unit 311 of the abnormality detection device 3 acquires the process data from the storage device 32 (FIG. 3: S1). For example, for the pieces of process data respectively output from the plurality of sensors (that is, a plurality of types of process data), the tag, which is identification information of the sensor or the like, and a measurement value associated with the tag are read out.

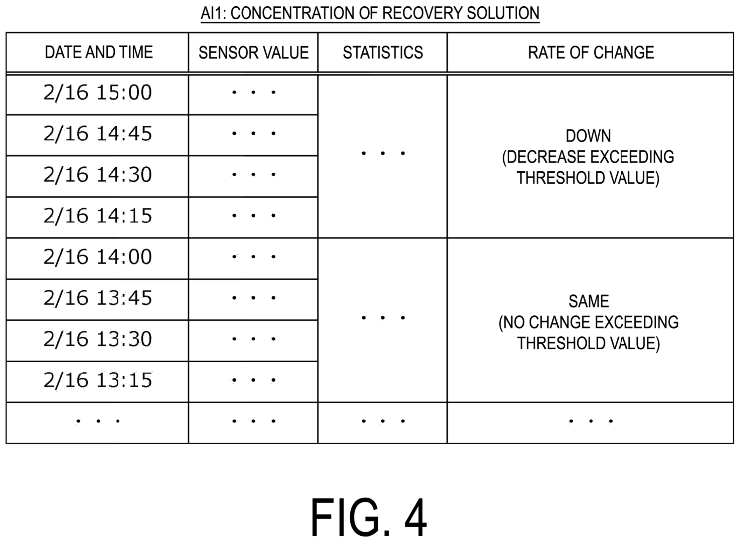

FIG. 4 is a diagram for explaining the process data and processing performed on the process data. FIG. 4 illustrates information regarding a concentration of a raw material in a recovery solution as an example of process data. Further, the table in FIG. 4 includes attributes of "date and time", "sensor value", "statistics", and "rate of change". In the field of "date and time", information indicating the date and time when the process data is measured is registered. In the field of "sensor value", a measurement value measured at the date and time corresponding to each record is registered. For example, a value obtained by measuring the recovery solution transferred to the plant 1 with a densitometer is registered. In S1 in FIG. 3, for example, a plurality of sensor values measured during a predetermined period are read out.

Further, the abnormality determination unit 312 determines whether the rate of change satisfies a predetermined condition (FIG. 3: S2). In this step, the abnormality determination unit 312 calculates predetermined statistics using, for example, the process data, and determines whether the degree of change satisfies a condition predetermined for each type of process data, based on the statistics. In the field of "statistics" in FIG. 4, for example, an average value (that is, a moving average) of the process data in a predetermined section (period) is registered. The length of the predetermined period is defined in advance for each type of process data. Although one average value in the section is illustrated for a plurality of records in the example in FIG. 4, a moving average corresponding to each record may be calculated while shifting the predetermined section immediately preceding the time point of the record. Then, the abnormality determination unit 312 determines whether a ratio of change from the statistics in the preceding section to the statistics in the following section exceeds a threshold value, for example. The threshold value is also defined in advance for each type of process data. In addition, it is preferable to determine the threshold value and the ratio of change by distinguishing between a positive sign and a negative sign (that is, increase and decrease). Note that a determination may be made based on a degree of change in process data over a plurality of sections, instead of the ratio of change between the two preceding and following sections. In the field of "rate of change" in FIG. 4, information indicating whether or not the rate of change satisfies the predetermined condition is registered. In the example in FIG. 4, information such as "DOWN", which indicates that there is a decrease exceeding the threshold value, and "SAME", which indicates that there is no change exceeding the threshold value, is registered. Further, the process data that is not used as a criterion for the determination is blank. Note that, the processing on the process data as illustrated in FIG. 4 is performed for each of the plurality of types of process data read out in S1.

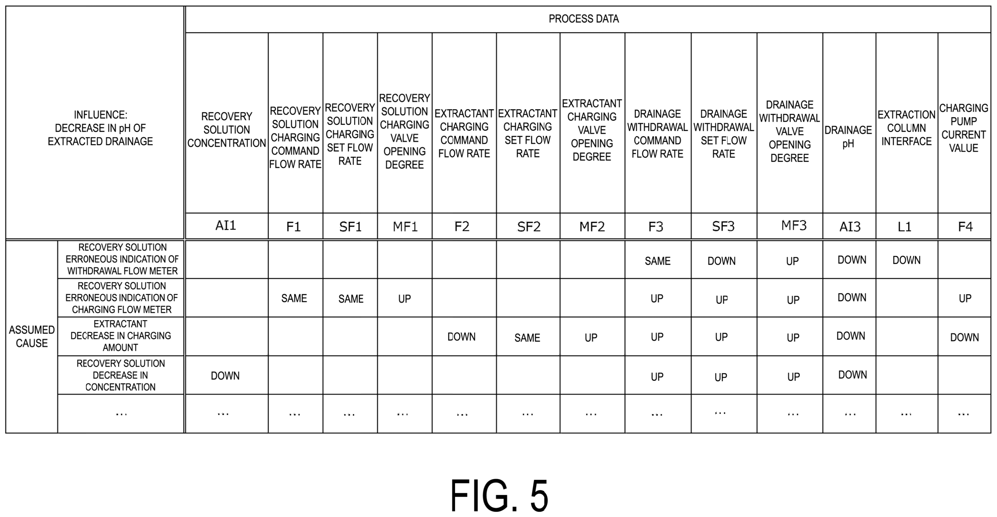

Then, the abnormality determination unit 312 determines whether or not the tendency of the change in the plurality of types of process data matches the predetermined pattern (FIG. 3: S3). The predetermined pattern is defined in advance for each type of irregularity to be detected. In addition, in a case in which a plurality of causes are assumed for the irregularity, the predetermined pattern may be defined for each assumed cause. FIG. 5 is a diagram for explaining a determination logic. FIG. 5 illustrates an example of a determination logic for detecting irregularity of "pH decrease in extracted waste liquid". The table in FIG. 5 includes a plurality of columns corresponding to types of process data and a plurality of rows corresponding to assumed causes of irregularity. Each row (record) includes information indicating a change tendency such as a decrease or an increase associated with a plurality of pieces of process data. That is, the determination logic is defined based on a combination of the change tendencies indicated in each record. That is, in a case in which the pattern of the change in the measured process data matches the pattern represented by any of the records in FIG. 5, it is determined that the irregularity due to the cause indicated by the corresponding record is detected. The determination logic as illustrated in FIG. 5 is, for example, to be preset based on the knowledge of an operator who performs operation of the plant 1.

In addition, in a case in which a determination is made that the changes in the plurality of process data match the predetermined pattern (S3: YES), the output unit 313 outputs a warning (FIG. 3: S4). In this step, the output unit 313 notifies the user terminal 4 of the detected irregularity via the control station 2. In addition, in a case in which the cause of the irregularity is identified, information indicating the cause may be further notified. Further, in a case in which information indicating an operation of an operator as a countermeasure is defined in association with the irregularity or in association with the irregularity and the cause thereof, the information indicating the countermeasure may be additionally notified.

On the other hand, in a case in which a determination is made that the changes in the plurality of pieces of process data do not match any of the predetermined patterns (S3: NO), or after S4, the abnormality detection processing is terminated. Note that the abnormality detection processing is repeatedly performed at predetermined timings.

### Effects

In a process in which a preferable operation state relatively greatly varies due to the influences of preceding processes, as in a recovery plant, generically defining whether the operation state is normal or abnormal has been difficult. That is, in a case in which the amount or concentration of the recovery solution received by the plant 1 changes, determining an appropriate operation state becomes necessary while balancing the cost of the extractant such as a dissolving agent or steam and the regulated waste water load. Accordingly, even when an operation condition to be the target of the steady state is determined at a certain point of time, responding to changes in the situation has not been feasible. As in the present embodiment, by detecting an abnormality or a sign thereof based on a combination of relative criteria such as the rate of change of the process data, a determination logic applicable to various situations can be created. Accordingly, it can be said that the abnormality detection can be performed in a process in which a preferable operation state changes.

Further, in general, there are plants that operate in a continuous mode, in which a target to be processed is continuously processed while being transferred at a predetermined speed, and plants that operate in a batch mode, in which the target to be processed is replaced for each cycle and processed. In a plant operating in a continuous mode, a preferred operation state may vary relatively greatly depending on the influence of a preceding process, and thus the abnormality detecting method described in the embodiment can be suitably used. Note that, according to the abnormality detecting method described in the embodiment, determination can be performed based only on the process data output from a plant in which an abnormality or a sign thereof is to be detected, without using the process data output in a preceding process.

### Modified Examples

Each of the configurations, combinations thereof, and the like in each of the embodiments is an example, and various additions, omissions, substitutions, and other changes of the configurations may be made as appropriate without departing from the spirit of the present disclosure. The present disclosure is not limited by the embodiment and is limited only by the claims. Each embodiment disclosed in the present specification can be combined with any other feature disclosed herein.

The plant 1 may be not only a chemical process plant but also any other type of production facility. In addition, at least part of the functions of the abnormality detection device 3 may be implemented in a distributed manner across a plurality of devices, and a plurality of devices may also be configured to provide the same function in parallel. At least part of the functions of the abnormality detection device 3 may be provided on a so-called cloud.

The tables illustrated in FIG. 4 and FIG. 5 are illustrative examples, and the information may be divided and stored in a plurality of tables by normalization, or may be combined and stored in a single table by denormalization, as appropriate.

Furthermore, the present disclosure includes a method and a computer program for performing the aforementioned processing, and a computer readable recording medium storing the program. The recording medium on which the program is stored enables the aforementioned processing by causing a computer to execute the program.

The computer readable recording medium refers to a recording medium that can accumulate information such as data or programs by electrical, magnetic, optical, mechanical, or chemical actions and can be read from a computer. Among such recording media, examples of recording media detachable from a computer include flexible disks, magneto-optical disks, optical disks, magnetic tapes, memory cards, and the like. Furthermore, as recording media fixed to a computer, there are HDD, solid state drive (SSD), ROM, and the like.

### Reference Signs List

100: System
1: Plant
2: Control station
3: Abnormality detection device
31: Processor
311: Data acquisition unit
312: Abnormality detection unit
313: Output unit
32: Storage device
33: Communication I/F
4: User terminal

## Claims

1. An abnormality detecting method performed by one or more computers, the method comprising:
reading a plurality of types of process data output from a plant;
calculating a rate of change for each of the plurality of types of process data; and
determining that an abnormality or a sign of the abnormality is detected when a combination of degrees of the rates of change related to the plurality of types of process data matches a predetermined pattern.

2. The abnormality detecting method according to claim 1, wherein
the pattern is defined for each assumed cause of the abnormality or the sign of the abnormality.

3. The abnormality detecting method according to claim 1 or 2,
wherein the pattern is defined by a combination of pieces of information respectively associated with the plurality of types of process data, the pieces of information each indicating an increase relative to a criterion, a decrease relative to the criterion, or a change within the criterion.

4. The abnormality detecting method according to any one of claims 1 to 3,
wherein the plant operates in a continuous mode in which a target to be processed is continuously processed while being transferred at a predetermined speed.

5. The abnormality detecting method according to claim 4,
wherein the target to be processed is a discharged substance discharged in an upstream process performed in the plant.

6. The abnormality detecting method according to claim 4 or 5, wherein
the plant performs detection of the abnormality or the sign of the abnormality during performance of a purification process for purifying a target substance from the target to be processed, a recovery process for recovering the target substance from the target to be processed, a cleaning process for cleaning the target to be processed, or a drying process for drying the target to be processed.

7. An abnormality detecting system, comprising:
one or more computers configured to perform the abnormality detecting method according to any one of claims 1 to 6.

8. An abnormality detecting program for causing one or more computers to execute the abnormality detecting method according to any one of claims 1 to 6.
